# EUROPEAN PATENT APPLICATION

(11) **EP 3 885 617 A1**
(43) Date of publication of application: **29.09.2021**
(21) Application number: 19886742.6
(22) Date of filing: 29.10.2019
(51) Int. Cl.: F16K 15/02, F16K 27/02

(54) **CHECK VALVE AND VALVE DEVICE HAVING SAME**

(30) Priority: 19.11.2018 JP 2018216410
(71) Applicant: Fujikoki Corporation, Tokyo 158-0082 (JP)
(72) Inventor: MOCHIZUKI, Atsushi, Tokyo 158-0082 (JP); FUKUYAMA, Kohei, Tokyo 158-0082 (JP)
(74) Representative: Ter Meer Steinmeister & Partner
(86) International application number: PCT/JP2019/042377
(87) International publication number: WO 2020/105380

(57) **Abstract**

Provided are a check valve and valve device that can be connected to pipes of various diameters while reducing costs. The check valve 1, which can connect the couplers 7, 8 to fluid pipes T1, T2 has: a check valve main body 2 provided with fluid passages 21 to 25 and a valve seat ST penetrated by the fluid passages; a valve body 3 which can be seated on the valve seat ST; a spring member 5 that biases the valve body 3 toward the valve seat ST; and a support member 4 that supports the spring member 5 with respect to the check valve main body 2, wherein the check valve main body 2 is a single component and has, on an end section of the fluid passage, a connection portion 25 for connecting the coupler 8; the minimum inner diameter ϕ1 of the fluid passages from valve seat ST to the connection portion 25 is larger than the maximum outer diameter ϕ2 of the valve body 3, and the coupler 8 connected to the connection portion 25 is spaced apart from the support member 4 held by the check valve main body 2.

## Description

### [Technical Field]

The present invention relates to a check valve and a valve device having the same for preventing backflow of a fluid.

### [BACKGROUND OF THE INVENTION]

Conventionally, in the refrigeration cycle used in air conditioning equipment such as car air conditioners, check valves are used to control the flow direction of the refrigerant (fluid).

For example, in the check valve disclosed in Patent Document 1, a conical spring is disposed in the support spring housing chamber of the check valve main body, and this conical spring biases an inverting plate joined to the valve body in a closing direction. When the pressure difference between the fluid pressure of the inlet passage side and the fluid pressure of the outlet passage side is larger than a predetermined value, the inverting plate turns downward and opens, such that the fluid flows downward from the outlet passage. On the other hand, when the pressure is equal to or less than a predetermined value, the conical spring turns upward and closes, thereby preventing backflow of the fluid.

### [Citation List]

### [Patent Documents]

[Patent Document 1] Japanese Patent No. 4,563,753

### [Summary of Invention]

### [Technical Problem]

Incidentally, since the case of the check valve of Patent Document 1 is composed of two parts including a lid member and a check valve main body, even if the size of the inverting plate or the conical spring joined to the valve body is larger than the diameter of the inlet passage or the outlet passage, by separating the lid member and the check valve main body, it is possible to easily include them in the case.

However, when the case of the check valve is constructed from two components as described above, in addition to the number of components increasing, it is necessary to provide a large seal at the mating portion of the lid member and the check valve main body, thereby incurring higher costs. On the other hand, there is a demand for using a check valve in common to connect to pipes of various diameters.

The present invention has been made in view of the above problems, and it is an object of the present invention is to provide a check valve and a valve device that can be connected to pipes of various diameters while reducing costs.

### [Means for Solving the Problems]

In order to solve the above problems, the check valve according to the present invention is a check valve capable of connecting couplers that connect to a fluid pipe, and includes: a check valve main body including a fluid passage and a valve seat penetrated by the fluid passage; a valve body which can be seated on the valve seat; a spring member for biasing the valve body toward the valve seat; and a support member for supporting the spring member with respect to the check valve main body; wherein: the check valve main body is a single component and has, on an end section of the fluid passage, a connection portion having an inner peripheral surface for connecting the coupler; a minimum inner diameter of the fluid passage from the valve seat to the connection portion is larger than a maximum outer diameter of the valve body; and the coupler connected to the connection portion is spaced apart from the support member held by the valve main body.

### [Effect of the Invention]

According to the present invention, it is possible to provide a check valve and a valve device that can be connected to pipes of various diameters while reducing costs.

### [Brief Description of Drawings]

[Figure 1] FIG. 1 is an axial cross-sectional view illustrating an embodiment of a check valve according to the present invention.
[Figure 2] FIG. 2 is an exploded view of the check valve 1.
[Figure 3] FIG. 3 is a view of a washer 4 and a valve body 3 in the direction indicated by the arrow A in FIG 2.
[Figure 4] FIG. 4 is a cross-sectional view illustrating an example of connecting an outlet side pipe T3 having a modified pipe diameter with respect to the check valve 1.

### [Description of Embodiment(s)]

Embodiments of the check valve according to the present invention will be described below with reference to the drawings. It should be noted that, although a check valve for pressure adjustment used in the refrigeration cycle of a car air conditioner or the like is primarily exemplified as the check valve according to the present invention, the check valve according to the present invention can be applied to various other forms of check valves.

### <Check Valve Configuration >

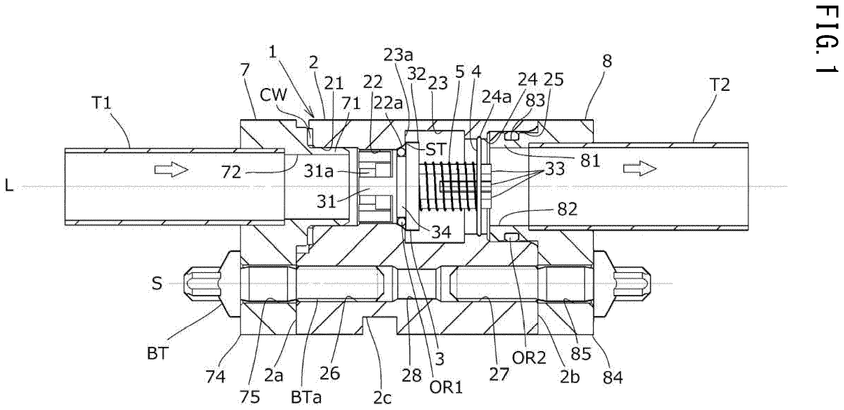

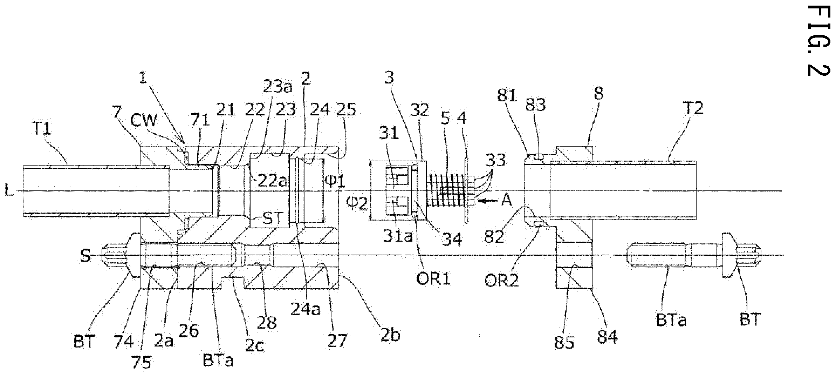

FIG. 1 is an axial cross-sectional view of a check valve 1 according to an embodiment of the present invention. FIG. 2 is an exploded view of the check valve 1. Here, the axis of the fluid passage (hereinafter referred to as the passage axis) of the check valve 1 is denoted by L, and the axis of the screw hole (hereinafter referred to as the screw axis) is denoted by S. The passage axis L and the screw axis S are parallel.

The check valve 1 illustrated in FIG. 1 has a check valve main body 2 that includes a refrigerant flow passage (also referred to as a fluid passage) for passing refrigerant therein and that consists of a single component, a valve body 3 disposed in the fluid passage of the check valve main body 2, a washer (support member) 4 attached to the check valve main body 2, and a coil spring (spring member) 5 for biasing the valve body 3 with respect to the washer 4. The check valve 1 is connected to, for example, a coupler to which a refrigerant pipe leading to an evaporator and compressor (not shown in the Figures) is connected, thereby forming a refrigeration cycle. Here, as illustrated by the arrows indicating the flow of the refrigerant in FIG. 1, the left side of the check valve is set as the inlet side of the refrigerant, and the right side is set as the outlet side of the refrigerant.

Starting from the inlet side of FIG. 1 and FIG. 2 and along the passage axis L, the check valve main body 2 includes a first connection portion 21, a first intermediate passage 22, a central passage 23, a second intermediate passage 24, and a second connection portion 25, thereby constituting the refrigerant flow path.

The inner diameter of the central passage 23 of the refrigerant flow path is the largest. The inner diameter of the first connection portion 21 is smaller than the inner diameter of the central passage 23, and the inner diameter of the first intermediate passage 22 is smaller than the inner diameter of the first connection portion 21.

Furthermore, the inner diameter of the second connection portion 25 is smaller than the inner diameter of the central passage 23, and the inner diameter of the second intermediate passage 24 is smaller than the inner diameter of the second connection portion 25. Here, as illustrated in FIG. 2, the inner diameter of the second intermediate passage 24 is denoted as ϕ1.

The central passage 23 includes an annular flange surface 23a that extends radially perpendicular to the passage axis L adjacent to the first intermediate passage 22. The side close to the passage axis L of the flange surface 23a has a valve seat ST. The center of the valve seat ST serves as a fluid passage, leading to the first intermediate passage 22, and the first intermediate passage 22 includes a tapered portion 22a adjacent to the central passage 23 that expands in diameter as it approaches the central passage 23.

A peripheral groove (concave portion) 24a is formed on the inner periphery of the second intermediate passage 24 on the outlet side from the center in the passage axis L direction.

In the check valve main body 2, a first screw hole 26 is formed on the inlet side end surface 2a in parallel with the first connection portion 21, and a second screw hole 27 is formed on the outlet side end surface 2b in parallel with the second connection portion 25. The first screw hole 26 and the second screw hole 27 are formed so as to share the screw axis S, and are connected to each other via a through-hole 28.

It should be noted that, on the outer periphery of the check valve main body 2, a concave portion 2c is formed on the side closer to the inlet side end face 2a than the outlet side end face 2b. The concave portion 2c can also serve as a mark indicating the inlet side of the check valve 1.

The valve body 3 housed in the check valve main body 2 includes a substantially cylindrical sliding portion 31 having an outer diameter that is substantially the same as the inner diameter of the first intermediate passage 22 of the check valve main body 2, a disk-shaped valve portion 32 having a diameter larger than that of the first intermediate passage 22 and whose outer peripheral end surface is seated on/separated from the valve seat ST, and a plurality (three in this case) of leg portions 33 extending parallel to the passage axis L from the center of the valve portion 32 toward the outlet side. A plurality of partial (absent) portions 31a are formed on the side surface of the sliding portion 31 at substantially equal intervals in the peripheral direction, and the partial portions 31 secure a flow path through which the refrigerant passes between the first intermediate passage 22 and the sliding portion 31. A peripheral groove 34 is formed on the outer periphery between the sliding portion 31 and the valve portion 32, and an O-ring OR1 is mounted therein.

The maximum outer diameter of the valve body 3 is the outer diameter ϕ2 of the valve portion 32, and the outer diameter ϕ2 of the valve portion 32 is smaller than the inner diameter ϕ1 of the second intermediate passage 24. In other words, the minimum inner diameter of the fluid passage from the valve seat ST (the flange surface 23a) to the second connection portion 25 (ϕ1) is larger than the maximum outer diameter of the valve body 3 (ϕ2).

Around the leg portions 33, a coil spring 5 having a relatively small wire diameter is disposed. One end of the coil spring 5 abuts against the outlet side end surface of the valve portion 32, and the other end of the coil spring 5 is supported by the washer 4. The coil spring 5 biases the valve body 3 toward the inlet side.

The valve body 3 moves along the passage axis L in the check valve main body 2 in accordance with the refrigerant pressure, and has a function of allowing/blocking the passage of the refrigerant flowing in from the first connection portion 21 side.

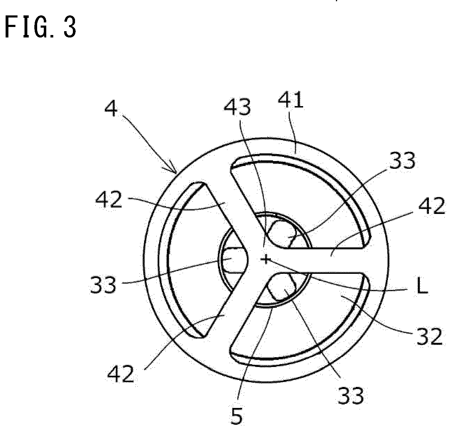

Figure 3 is a view of the washer 4 and valve body 3 in the direction indicated by the arrow A in FIG 2. The washer 4 has an annular portion 41 and a plurality (three, in the present case) of beam portions 42 extending radially at an equal angle from the center of the washer 4 toward the annular portion 41. The inner ends of each beam portion 42 are joined at a central portion 43, and the outer ends are joined to the annular portion 41.

The leg portions 33 of the valve body 3 enter between adjacent beam portions 42. As illustrated in FIG. 3, one leg portion 33 is in contact with the two beam portions 42 sandwiching it and the central portion 43. The coil spring 5 is supported by being in contact with the inlet side end surface of each beam portion 42.

The annular portion 41 of the washer 4, as illustrated in FIG. 1, is engaged with the peripheral groove 24a of the check valve main body 2, and thereby the washer 4 is held in the check valve main body 2.

### (Assembly of Check Valve)

When assembling the check valve 1, after first mounting the O-ring OR1 in the peripheral groove 34 of the valve body 3, the sliding portion 31 is inserted into the first intermediate portion 22 of the check valve main body 2. Since the outer diameter ϕ2 of the valve portion 32 is smaller than the inner diameter ϕ1 of the second intermediate passage 24, even if the check valve main body 2 is formed of one component, the valve body 3 can be easily inserted into the check valve main body 2 from the second connection portion 25 side. At this time, the outer periphery of the O-ring OR1 is in contact with the tapered portion 22a.

Then, the coil spring 5 is mounted on the outer periphery of the leg portions 33 of the valve body 3, and the washer 4 is further inserted from the end of the leg portions 33. At this time, when the annular portion 41 and the central portion 43 are pressed so as to be displaced along the passage axis L, the beam portion 42 is tilted and elastically deformed. As a result, the washer 4 can be easily inserted into the second intermediate passage 24, the annular portion 41 can be engaged with the peripheral groove 24a, and the leg portions 33 enter into and are held between the two beam portions 42. In this way, the check valve 1 is completed. It should be noted that the end portion of the leg portions 33 protrudes further on the outlet side than the bottom surface of the second connection portion 25, but the leg portions 33 may be made shorter so as not to protrude.

In FIG. 1 and FIG. 2, a first coupler 7 provided on the inlet side includes a hollow fitting portion 71 configured to engage with the inner peripheral surface of the first connection portion 21, an inlet flow passage 72 formed on the inner side of the fitting portion 71, and the protruding portion 74 that extends away from the fitting portion 71 and toward the screw axis S side in a direction orthogonal to the passage axis L. A through-hole 75 is formed on the protruding portion 74 so as to penetrate the first coupler 7.

The inlet side pipe T1 is connected by being engaged with the inner peripheral surface of the inlet flow passage 72 of the first coupler 7, and subsequently brazed around its entire periphery.

At the time of assembly of the coupler, in the first coupler 7 connecting the inlet side pipe T1, after inserting the fitting portion 71 into the first connection portion 21 such that the axis of the through-hole 75 coincides with the screw axis S of the check valve main body 2 in a state in which a seal washer CW coated with resin on copper, SUS, or metal is attached around the fitting portion 71, a seated bolt BT is inserted through the through-hole 75, and the threaded portion BTa is screwed into the first screw hole 26. As a result, the first coupler 7 is in close contact with the inlet side end surface 2a of the check valve main body 2, and further, the seal washer CW pressed between the two prevents the refrigerant from leaking out from between the fitting portion 71 and the first connection portion 21.

On the other hand, the second coupler 8 provided on the outlet side includes a hollow fitting portion 81 configured to engage with the inner peripheral surface of the second connection portion 25, an outlet flow passage 82 formed on the inner side of the fitting portion 81, a peripheral groove 83 formed on the outer periphery of the fitting portion 81, and a protruding portion 84 that extends away from the fitting portion 81 and toward the screw axis S side in a direction orthogonal to the passage axis L. A through-hole 85 is formed on the protruding portion 84 so as to penetrate the second coupler 8.

In a state in which the end of the outlet side pipe T2 is engaged with the outlet side end of the outlet channel 82, the outlet side pipe T2 and the second coupler 8 are connected by being brazed around the entire periphery.

At the time of assembly of the coupler, in the second coupler 8 connecting the outlet side pipe T2, after inserting the fitting portion 81 into the second connection portion 25 so that the axis of the through-hole 85 coincides with the screw axis S of the check valve main body 2 in a state in which the O-ring OR2 is attached to the peripheral groove 83, the seated bolt BT is inserted through the through-hole 85, and the threaded portion BTa is screwed into the second screw hole 27. As a result, the second coupler 8 is in close contact with the outlet side end surface 2b of the check valve main body 2. The O-ring OR2 prevents refrigerant from leaking out from between the fitting portion 81 and the second connection portion 25.

In this way, the check valve 1 and the first coupler 7 and/or the second coupler 8 connected to the check valve 1 constitute the valve device. According to the present embodiment, since the fitting portion 81 is engaged with the inner peripheral surface of the second connection portion 25, in the case of connecting a pipe T2 having a diameter smaller than the inner diameter of the second connection portion 25 to the check valve main body 2 via the second coupler 8, it is possible to prevent the second coupler 8 from protruding further outward in the orthogonal direction of the axis L than the outer periphery of the check valve main body 2, and it is possible to suppress the length of the valve device in the axis L direction, such that a compact valve device can be provided.

### <Operation of the Check Valve>

Next, the operation of the check valve 1 will be briefly described. In FIG. 1, in the case that the refrigerant pressure on the inlet side pipe T1 side is lower than the refrigerant pressure on the outlet side pipe T2 side, the end surface of the valve portion 32 is seated on the valve seat ST of the check valve main body 2, which prevents the refrigerant from passing through the check valve 1 and prevents the refrigerant from flowing out to the inlet side pipe T1. At this time, the O-ring OR1 comes into contact with the tapered portion 22a, so that leakage of the refrigerant can be reliably prevented.

On the other hand, in the case that the refrigerant pressure on the inlet side pipe T1 side is higher than the refrigerant pressure on the outlet side pipe T2 side, the valve portion 32 moves in the valve opening direction (to the right in FIG. 1), the end face of the valve portion 32 is separated from the valve seat ST of the check valve main body 2, and refrigerant is allowed to pass through the check valve 1, such that refrigerant flows from the inlet side pipe T1 to the outlet side pipe T2.

Here, in the refrigeration system for providing the check valve 1, there are cases in which it is desirable to modify the pipe diameter of the inlet side pipe T1 connected to the first coupler 7 or the outlet side pipe T2 connected to the second coupler 8.

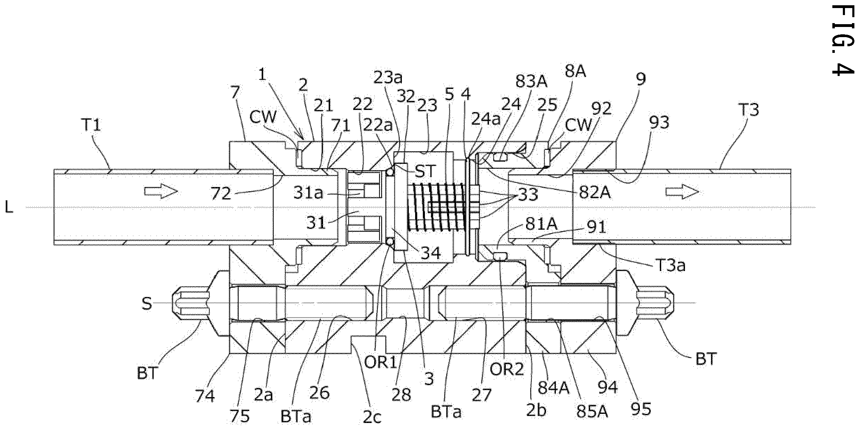

FIG. 4 is a cross-sectional view illustrating an example of connecting an outlet side pipe T3 having a modified pipe diameter with respect to the check valve 1 connecting the first coupler 7. In FIG. 4, the second coupler 8A (the intermediate coupler) provided on the outlet side includes a hollow fitting portion 81A (the intermediate fitting portion) configured to engage with the second connection portion 25, an intermediate flow path 82A formed on the inner side of the fitting portion 81A, a peripheral groove 83A formed on the outer periphery of the fitting portion 81A, and a protruding portion 84A that extends away from the fitting portion 81A and toward the screw axis S in a direction orthogonal to the passage axis L. A through-hole 85A is formed on the protruding portion 84A so as to penetrate the second coupler 8A.

Furthermore, the third coupler 9 includes a hollow fitting portion 91 configured to engage with the intermediate flow path 82A of the second coupler 8A, an outlet flow path 92 formed on the inner side of the fitting portion 91, and a protruding portion 94 that extends away from the fitting portion 91 and toward the screw axis S side in a direction orthogonal to the passage axis L. A through-hole 95 is formed on the protruding portion 94 so as to penetrate the third coupler 9.

The outlet side pipe T3 is connected by being engaged with the peripheral surface of the outlet flow passage 92 of the third coupler 9, and subsequently brazed around its entire periphery.

At the time of assembly of the coupler, in the third coupler 9 connecting the outlet side pipe T3, the fitting portion 91 is inserted into the intermediate flow path 82A so that the axis of the through-hole 95 coincides with the axis of the through-hole 85A in a state in which the seal washer CW is attached around the fitting portion 91.

Furthermore, in a state in which the O-ring OR2 is attached to the peripheral groove 83A in the second coupler 8A to which the third coupler 9 is connected, after inserting the fitting portion 81A into the second connection portion 25 such that the axis of the through-hole 85A coincides with the screw axis S of the check valve main body 2, the seated bolt BT is inserted through the through-hole 95 and the through-hole 85A, and the threaded portion BTa is screwed into the second screw hole 27. As a result, the second coupler 8A is in close contact with the outlet side end surface 2b of the check valve main body 2.

At this time, the end portion of the fitting portion 91 of the third coupler 9 is located further inside the L direction of the axis than the end of the connection portion 25; that is, a part of the fitting portion 91 and the second connection portion 25 overlap in a direction orthogonal to the axis L. As a result, the length of the check valve main body 2 to the third coupler 9 in the axis L direction can be suppressed, and a compact configuration can be realized.

In addition, similar to the embodiment described above, since the fitting portion 81A is engaged with the inner peripheral surface of the second connection portion 25, in the case that the check valve main body 2 is connected to via the second coupler 8A, it is possible to prevent the second coupler 8A from protruding further outward in the orthogonal direction of the axis L than the outer periphery of the check valve main body 2, and it is possible to suppress the length of the valve device in the axis L direction, such that a compact valve device can be provided.

In this way, the check valve main body 2 can be left as-is, and by connecting a third coupler 9 to which pipes having different pipe diameters are connected in series with the second coupler 8A, and further connecting the second coupler 8A to the check valve main body 2, different valve devices can be configured. That is, a common check valve main body 2 can be used in refrigeration systems having different pipe diameters, and the cost can be reduced.

According to the present embodiment, by connecting the third coupler 9 and the outlet side pipe T3 via the second coupler 8A, since the pipe diameter can be gradually reduced in stages even in cases when the outer diameter of the outlet side pipe T3 is relatively smaller than the inner diameter of the second connection portion 25, the occurrence of cavitation can be suppressed by smoothing the flow of fluid.

In the above-described embodiment, although connection to pipes with different pipe diameters is made possible by replacing the second coupler and then connecting a third coupler in series, the second coupler may be replaced with one that can be directly connected to pipes with different pipe diameters, and in this way eliminate the need for the third coupler. In addition, the first coupler may obviously be replaced with one that can be connected to pipes with different pipe diameters.

In addition, in the present embodiment, since the washer is independent from the coupler, the check valve 1 can exhibit functionality for allowing/preventing the passage of refrigerant regardless of whether or not there is a connection to a coupler. Accordingly, since it is possible to inspect whether or not the check valve 1 operates properly before connecting the coupler that will actually be used, ease of handling is improved.

It should be noted that the present invention is not limited to the above-described embodiments. Within the scope of the present invention, variations of any of the components of the above-described embodiments are possible. In addition, any component can be added or omitted in the above-described embodiments.

### [Reference Sign List]

- 1: Check valve
- 2: Check valve main body
- 3: Valve body
- 4: Washer (support member)
- 5: Coil spring
- 7: First coupler
- 8, 8A: Second coupler
- 9: Third coupler
- BT: Seated bolt
- BTa: Threaded portion of seated bolt
- L: Passage axis
- S: Screw axis
- OR1, OR2: O-ring
- CW: Seal washer
- ST: Valve seat
- T1: Inlet side pipe
- T2, T3: Outlet side pipe

## Claims

1. A check valve capable of connecting a coupler that connects to a fluid pipe, the check valve comprising:
a check valve main body including a fluid passage and a valve seat penetrated by the fluid passage;
a valve body which can be seated on the valve seat;
a spring member for biasing the valve body toward the valve seat; and
a support member for supporting the spring member with respect to the check valve main body;
wherein:
the check valve main body is a single component and has, on an end section of the fluid passage, a connection portion having an inner peripheral surface for connecting the coupler;
a minimum inner diameter of the fluid passage from the valve seat to the connection portion is larger than a maximum outer diameter of the valve body; and
the coupler connected to the connection portion is spaced apart from the support member held by the valve main body.

2. The check valve according to claim 1, wherein:
the support member includes:
an annular portion, and
a plurality of beam portions extending radially toward the annular portion from a center of the support member;
the valve body includes a plurality of leg portions extending between adjacent beam portions; and
the check valve main body includes a concave portion in the fluid passage, said annular portion engaging with the concave portion.

3. A valve device comprising:
the check valve according to claim 1 or 2; and
an intermediate coupler having a hollow intermediate fitting portion,
wherein, by engaging an outer peripheral surface of the intermediate fitting portion to an inner peripheral surface of the connection portion, the intermediate coupler and the check valve are connected such that fluid can pass through.

4. The valve device according to claim 3, further comprising:
a coupler having a hollow fitting portion connected to a fluid pipe; wherein:
by engaging an outer peripheral surface of the fitting portion to an inner peripheral surface of the intermediate fitting portion, the intermediate coupler and the fluid pipe are connected to each other via the coupler such that fluid can pass through; and
the connection portion of the check valve main body and the fitting portion of the coupler overlap in a direction orthogonal to an axis of the fluid passage.

5. The valve device according to claim 3 or 4, wherein the valve body is inserted and attached from the connection portion side with which the intermediate coupler engages in a direction orthogonal to an axis of the fluid passage.

6. The valve device according to claim 4, wherein:
the check valve main body has a screw hole having a screw axis parallel to an axis of the fluid passage; and
the coupler has a projecting portion that projects from the fitting portion to the screw axis side, and is attached to the check valve main body by using a bolt that is inserted through a through-hole provided in the projecting portion and screwed into the screw hole.
